# FASCICULE DE BREVET EUROPEEN

(11) **EP 3 238 474 B1**
(45) Date de publication et mention de la délivrance du brevet: **13.03.2019**
(21) Numéro de dépôt: 15830805.6
(22) Date de dépôt: 17.12.2015
(51) Int. Cl.: H04W 12/00, G06Q 20/32

(54) **PROCÉDÉ DE SÉCURISATION DE TRANSACTIONS SANS CONTACT**
VERFAHREN ZUR SICHERUNG KONTAKTLOSER TRANSAKTIONEN
METHOD FOR SECURING CONTACTLESS TRANSACTIONS

(30) Priorité: 22.12.2014 FR 1463119
(43) Date de publication de la demande: 01.11.2017
(73) Titulaire: Orange, 75015 Paris (FR)
(72) Inventeur: SABT, Mohamed, CS 50010 92326 Chatillon Cedex (FR); ALATTAR, Mouhannad, CS 50010 92326 Chatillon Cedex (FR); ACHEMLAL, Mohammed, 14000 Caen (FR)
(86) Numéro de dépôt international: PCT/FR2015/053583
(87) Numéro de publication internationale: WO 2016/102831

(56) Documents cités:
- POURGHOMI PARDIS ET AL: "Trusted integration of cloud-based NFC transaction players", 2013 9TH INTERNATIONAL CONFERENCE ON INFORMATION ASSURANCE AND SECURITY (IAS), IEEE, 4 décembre 2013 (2013-12-04), pages 6-12, XP032672507, DOI: 10.1109/ISIAS.2013.6947745
- Michael Roland: "Software Card Emulation in NFC-enabled Mobile Phones: Great Advantage or Security Nightmare?", , 18 juin 2012 (2012-06-18), XP055089033, Extrait de l'Internet: URL:http://www.medien.ifi.lmu.de/iwssi2012 /papers/iwssi-spmu2012-roland.pdf [extrait le 2013-11-19]
- Clarksville Rd: "Smart Card Alliance A SMART CARD ALLIANC E MOBILE & NFC COUNCIL WHITE PAPER", , 1 août 2014 (2014-08-01), XP055171894, Extrait de l'Internet: URL:http://www.smartcardalliance.org/wp-co ntent/uploads/HCE-101-WP-FINAL-081114-clea n.pdf [extrait le 2015-02-25]

## Description

La présente invention concerne un procédé de sécurisation de transactions sans contact.

Elle trouve une application particulièrement intéressante dans la sécurisation de services sans contact sensibles, tels que des services de paiement sur terminaux mobiles intelligents (ou « smartphone » en anglais).

On connaît des services sans contact sur terminaux mobiles, par exemple des services de paiement. Les terminaux mobiles sont habituellement équipés d'un élément de sécurité, agencé pour mémoriser une application sensible, ainsi que des données sensibles de l'utilisateur nécessaires à l'exécution de l'application. Récemment, l'introduction d'un environnement d'émulation de carte (on parle de « HCE » pour « Host Card Emulation ») dans les terminaux mobiles intelligents a permis la mise en oeuvre des services sans contact sensibles indépendamment d'un élément de sécurité. Un tel environnement permet au terminal mobile de se comporter comme une carte à puce. Dans une architecture HCE, les applications sensibles sont installées et s'exécutent au niveau du système d'exploitation du terminal mobile qui constitue l'hôte (ou le « host » en anglais) de ces applications. Une telle solution présente l'avantage de faciliter le déploiement et la mise à jour de services. En effet, les architectures d'exécution et de gestion sont plus simples : elles nécessitent moins de composants techniques et impliquent moins d'acteurs. Cependant, il est connu que les applications sur mobiles et le système d'exploitation dont elles dépendent n'offrent pas le même niveau de sécurité que les applications qui reposent sur un élément de sécurité. Dans ce cas, d'autres approches de sécurité sont proposées.

Une des approches mises en oeuvre dans la version HCE de l'implémentation commerciale de l'application de paiement « google wallet » proposée par Google™ consiste à stocker les informations sensibles de l'application sur un serveur distant d'une architecture d'informatique dans le nuage (le terme anglais « cloud » est habituellement utilisé). Par exemple, des informations sensibles d'identification et d'authentification ou des numéros de comptes bancaires sont stockées sur le serveur distant. Lors de l'exécution de l'application HCE de paiement entre le terminal mobile et le lecteur sans contact, le lecteur envoie des commandes à l'application hébergée sur le terminal mobile. Certaines commandes sont traitées directement par l'application du terminal mobile, d'autres commandes nécessitent des données sensibles pour répondre au lecteur. Dans ce cas, l'application HCE contacte le serveur distant afin d'obtenir les données sensibles stockées sur le serveur. Le stockage des données sur le serveur distant est destiné à protéger ces données contre des attaquants qui sont susceptibles d'accéder au terminal mobile. La communication entre le terminal mobile et le serveur distant qui héberge les données sensibles repose sur le protocole « TLS » (pour « Transport Layer Security » en anglais), destiné à protéger la confidentialité et l'intégrité de ces données. Il est important de noter que la logique de l'application de paiement est exécutée au niveau du mobile.

Cependant, une telle solution est sensible à plusieurs types d'attaques. Par exemple, un attaquant peut voler des données sensibles de l'utilisateur. Les données sont stockées sur le serveur distant supposé sûr et protégées lors de leur transmission du serveur au terminal mobile au moyen du protocole TLS. Pour créer un canal sécurisé, le protocole TLS a besoin de données d'identification et authentification (ou « credentials » en anglais) pour authentifier l'application de paiement auprès du serveur afin que le serveur ait l'assurance de communiquer avec la bonne application. Ces données d'identification et d'authentification sont stockées sur le terminal mobile. Un attaquant peut donc subtiliser ces données et accéder aux données sensibles stockées sur le serveur. Le vol de données d'authentification est possible dès lors que l'attaquant possède des privilèges adéquats.

Un deuxième exemple d'attaque consiste à modifier la logique de l'application de paiement. L'application de paiement est exécutée dans le terminal mobile et donc, les données qu'elle utilise ainsi que les codes exécutés sont présents dans la mémoire vive du terminal mobile. Un attaquant qui a accès à des modules de gestion de la mémoire du terminal peut non seulement lire des données sensibles en mémoire mais également réécrire une partie du code chargé dans la mémoire vive du terminal. Ainsi, si l'activation de l'application de paiement nécessite la saisie d'un mot de passe, l'attaquant peut réécrire le code de manière à supprimer les instructions qui demandent ou qui vérifient le mot de passe. L'attaquant peut ainsi voler le terminal mobile de l'utilisateur et utiliser l'application de paiement sans connaître le mot de passe de l'utilisateur.

POURGHOMI PARDIS et al: "Trusted Intégration of Cloud-based NFC Transaction Players", 2013 9TH INTERNATIONAL CONFERENCE ON INFORMATION ASSURANCE AND SECURITY (IAS), IEEE, 4 décembre 2013, pages 6-12, divulgue un procédé de sécurisation de transactions d'un service sans contact impliquant un terminal mobile, un lecteur sans contact et un serveur distant. Un des buts de l'invention est de remédier à des insuffisances/inconvénients de l'état de la technique et/ou d'y apporter des améliorations.

A cette fin, l'invention propose un procédé de sécurisation d'une transaction d'un service sans contact, ledit service étant mémorisé dans un terminal mobile, ladite transaction impliquant le terminal mobile, un lecteur sans contact et un serveur distant, ledit serveur mémorisant au moins une donnée ou/et fonction sensible du service nécessaire à l'exécution de la transaction, ledit terminal comprenant un module de sécurité, ledit procédé étant caractérisé en ce que le terminal mémorise également une application sans contact de sécurisation et qu'il comprend les étapes suivantes, mises en oeuvre par le terminal mobile :
- réception par l'application de sécurisation, en provenance du lecteur sans contact d'une première valeur de détermination d'une clé de session,
- réception, en provenance du serveur, d'une deuxième valeur de détermination d'une clé de session et d'un premier mot de passe à usage unique calculé par le serveur au moyen d'une clé secrète partagée avec l'élément de sécurité, ledit premier mot de passe à usage unique étant envoyé au module de sécurité,
- envoi au lecteur sans contact de la deuxième valeur de détermination d'une clé de session et d'un message d'authentification d'au moins le premier mot de passe à usage unique, ledit message d'authentification étant destiné à être vérifié par le lecteur et lesdites première et deuxième valeurs de détermination étant utilisées par le serveur et par le lecteur pour calculer une clé de session, ladite clé étant destinée à être utilisée pour sécuriser les échanges entre le lecteur et le serveur.

Le procédé permet ainsi de sécuriser le lien de communication entre le lecteur NFC et le serveur distant qui héberge la partie sensible du service sans contact, par exemple un numéro de compte bancaire, une fonction de signature de données, etc., dans le cadre d'un service de paiement. Il y a authentification mutuelle entre l'élément de sécurité et le serveur distant et authentification mutuelle entre le lecteur sans contact et le serveur distant. Cette dernière permet de garantir que le lecteur NFC négocie avec le bon serveur distant et vice versa durant l'établissement du canal sécurisé. Le serveur distant a également la garantie que le terminal qui échange des données avec le lecteur sans contact appartient bien à l'utilisateur dont il manipule les données et fonctions sensibles au cours de la transaction en cours. La présence de l'élément de sécurité permet de garantir que le serveur parle avec le bon utilisateur.

Il est admis que les données transmises entre le terminal mobile et le lecteur sont intègres. En effet, du fait de la courte distance qui sépare le terminal du lecteur lors d'une transaction, une attaque man-in-the-middle est pratiquement impossible à mettre en place. Cependant, il a été choisi d'établir un canal sécurisé entre le lecteur sans contact et le serveur distant. En effet, les problèmes de sécurité qui sont souvent consécutifs à des attaques sur le terminal mobile ne peuvent ainsi impacter les échanges entre le lecteur et le serveur distant.

Selon le procédé décrit ici, les commandes reçues du lecteur et qui concernent des informations sensibles ou nécessitent l'exécution de fonctions sensibles sont exécutées directement par le serveur distant, et non pas par l'application sans contact qui réside sur le terminal mobile. Une attaque est donc plus difficile à réaliser car les mesures de sécurité mises en place pour protéger un serveur sont en général éprouvées. Ainsi, on évite des attaques habituellement perpétrées contre le canal sécurisé qui relie l'application sans contact au serveur distant.

Selon un exemple de réalisation, le procédé comprend une étape d'obtention du module de sécurité d'un statut d'authentification, ledit statut étant obtenu en comparant le premier mot de passe à usage unique avec un deuxième mot de passe à usage unique calculé par le module de sécurité au moyen de la clé secrète partagée avec le serveur, le statut étant positif lorsque les premier et deuxième mots de passe à usage unique sont identiques, le statut étant également utilisé par l'élément de sécurité pour le calcul du message d'authentification.

Le statut d'authentification, obtenu par le module de sécurité est garant de l'authentification du serveur auprès du module de sécurité. Ce statut qui est ensuite transmis au serveur distant permet à celui-ci de s'assurer du succès de l'authentification mutuelle entre le module de sécurité et le serveur.

Selon un exemple de réalisation, le procédé comprend une étape de réception du lecteur et retransmission au serveur d'une valeur secrète obtenue en chiffrant le message d'authentification et le statut d'authentification au moyen de la clé de session.

La valeur secrète qui est obtenue en chiffrant le message d'authentification et le statut d'authentification au moyen de la clé de session est destinée à réduire les possibilités d'attaque par relais. En effet, la clé de session utilisée pour la calculer n'est connue que du lecteur et du serveur. Un attaquant distant ne peut demander au lecteur de chiffrer un message d'authentification qu'il aurait généré. En effet, on estime que le lecteur NFC doit être suffisamment proche du terminal mobile lors de la transaction, ce qui rend difficile ce genre d'attaque si l'attaquant n'a pas pris le contrôle de l'application de sécurisation.

Dans un exemple de réalisation, le procédé comprend en outre les étapes suivantes :
- réception, en provenance du serveur, d'une première signature calculée à partir d'au moins un identifiant de l'élément de sécurité et d'une clé de signature propre au serveur,
- envoi de ladite signature au lecteur,
- réception du lecteur et retransmission au serveur d'une deuxième signature calculée à partir d'au moins l'identifiant du module de sécurité et d'une clé de signature propre au lecteur.

L'envoi des signatures de données générées d'une part par le serveur à l'attention du lecteur et d'autre part du lecteur à l'attention du serveur garantissent l'intégrité des données échangées.

Dans un exemple de réalisation, le mot de passe à usage unique est calculé en chiffrant au moyen d'une clé secrète partagée par l'élément de sécurité et le serveur un compteur incrémenté à chaque session.

L'utilisation d'une clé secrète partagée par l'élément de sécurité et le serveur pour générer le mot de passe à usage unique garantit la sécurité de ce mot de passe qui est transmis du serveur à l'application de sécurisation, puis de l'application de sécurisation à l'élément de sécurité.

De façon avantageuse, le procédé comprend, lorsque les échanges entre le lecteur et le serveur sont chiffrés au moyen de la clé de session, les étapes suivantes :
- réception en provenance du lecteur d'un message d'information propre au service et destiné à un utilisateur du terminal, ledit message ayant été envoyé du serveur au lecteur,
- envoi dudit message au service, ledit message étant affiché sur une interface utilisateur du terminal.

Lorsque le serveur envoie un message destiné à être affiché sur une interface du terminal mobile à l'attention de l'utilisateur, celui-ci est acheminé dans le canal sécurisé, via le lecteur sans contact, à l'application de sécurisation qui le retransmet au service sans contact. Ainsi, l'envoi de messages par le serveur est systématiquement sécurisé.

Avantageusement, le procédé comprend, une fois que les échanges entre le lecteur et le serveur sont chiffrés au moyen de la clé de session, les étapes suivantes :
- réception en provenance du service d'une donnée saisie par l'utilisateur, ladite donnée ayant été requise par le serveur,
- envoi de la donnée saisie au lecteur sans contact, ladite donnée saisie étant destinée à être transmise au serveur.

De même, lorsqu'il est demandé à l'utilisateur du service de saisir une donnée de service sur le terminal, par exemple un code d'identification personnelle, celle-ci est acheminée au serveur distant via l'application de sécurisation qui la retransmet au lecteur NFC pour emprunter le canal sécurisé jusqu'au serveur. L'envoi d'informations du service au serveur est donc systématiquement sécurisé entre le lecteur et le serveur.

L'invention concerne aussi un terminal mobile adapté pour la sécurisation d'une transaction d'un service sans contact, ledit terminal mémorisant ledit service sans contact, ladite transaction impliquant le terminal mobile, un lecteur sans contact et un serveur distant, ledit serveur mémorisant au moins une donnée et/ou fonction sensible du service nécessaire à l'exécution de la transaction, ledit terminal comprenant un module de sécurité, ledit terminal étant caractérisé en ce qu'il mémorise une application de sécurisation et qu'il comprend en outre :
- des premiers moyens de réception, agencés pour recevoir du lecteur sans contact une première valeur de détermination d'une clé de session,
- des deuxièmes moyens de réception, agencés pour recevoir en provenance du serveur, une deuxième valeur de détermination d'une clé de session et un premier mot de passe à usage unique calculé par le serveur au moyen d'une clé secrète partagée avec l'élément de sécurité,
- des moyens d'envoi, agencés pour envoyer au lecteur sans contact la deuxième valeur de détermination d'une clé de session et un message d'authentification d'au moins le premier mot de passe à usage unique, ledit message d'authentification étant destiné à être vérifié par le serveur et lesdites première et deuxième valeurs de détermination étant utilisées par le serveur et par le lecteur pour calculer une clé de session, ladite clé étant destinée à être utilisée pour sécuriser les échanges entre le lecteur et le serveur.

L'invention porte également sur un système de sécurisation d'une transaction d'un service sans contact, comprenant un terminal mobile tel que décrit précédemment, et :
- un lecteur sans contact adapté pour communiquer avec l'application de sécurisation du terminal mobile, et comprenant :
   - des moyens d'envoi, agencés pour envoyer à l'application de sécurisation la première valeur de détermination de la clé de session,
   - des moyens de réception, agencés pour recevoir la deuxième valeur de détermination de la clé de session,
   - des moyens de calcul de la clé de session, agencés pour calculer la clé de session à partir des première et deuxième valeurs de détermination de la clé de session,
- un serveur distant adapté pour mémoriser au moins une donnée et/ou fonction sensible de l'application de paiement et comprenant :
   - des moyens d'envoi, agencés pour envoyer au terminal mobile la première valeur de détermination de la clé de session,
   - des moyens de calcul et d'envoi, agencés pour calculer le premier mot de passe à usage unique et l'envoyer à l'application de sécurisation,
   - des moyens de calcul, agencés pour calculer la clé de session,
   - des moyens de réception et de vérification agencés pour recevoir le message d'authentification et pour le vérifier.

L'invention concerne aussi un programme d'ordinateur sur un support de données et chargeable dans la mémoire d'un terminal mobile, le programme comprenant des instructions de code pour l'exécution des étapes du procédé de sécurisation d'une transaction d'un servie sans contact selon l'invention, lorsque le programme est exécuté sur ledit terminal mobile.

L'invention porte également sur un support de données dans lequel est enregistré le programme décrit précédemment.

D'autres caractéristiques et avantages de la présente invention seront mieux compris de la description et des dessins annexés parmi lesquels :
- la figure 1 est une représentation schématique d'une architecture adaptée pour mettre en oeuvre les étapes d'un procédé de mise en oeuvre d'une transaction sans contact, selon un premier exemple de réalisation de l'invention ;
- la figure 2 présente les étapes d'un procédé de mise en oeuvre d'une transaction sans contact, selon un premier exemple de réalisation de l'invention ;
- la figure 3 est une représentation schématique fonctionnelle d'un terminal mobile, selon un exemple de réalisation de l'invention.

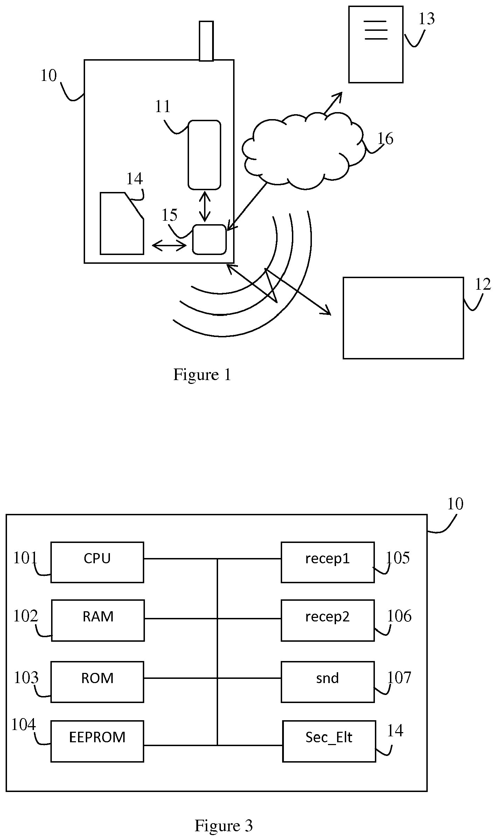

Une architecture adaptée pour mettre en oeuvre les étapes du procédé d'exécution d'une transaction sans contact, selon un exemple de réalisation de l'invention, va maintenant être décrite en relation avec la figure 1.

Un utilisateur (non représenté sur la figure 1) possède un terminal mobile 10 intelligent (ou « smartphone » en anglais) adapté pour mettre en oeuvre des services sans contact.

Le terminal mobile 10 mémorise une application sans contact 11, par exemple un service de paiement. Plus précisément, le terminal mobile 10 mémorise un module de paiement comprenant des instructions de code pour mettre en oeuvre des étapes de l'application de paiement qui sont exécutées par le terminal mobile 10. L'application de paiement 11 est mémorisée et s'exécute au niveau du système d'exploitation du terminal 10. Le terminal mobile 10 mémorise également une application de sécurisation 15, destinée à gérer la négociation de paramètres de sécurité entre le lecteur NFC 12 et le serveur 13 au moyen de l'élément de sécurité 14 dans le cadre de l'exécution de l'application de paiement 11. Les paramètres de sécurité ainsi négociés sont destinés à établir une connexion sécurisée de bout en bout entre un lecteur NFC 12 et un serveur distant 13. L'application de sécurisation 15 est en coupure des échanges entre le lecteur NFC 12 et l'application de paiement 11. L'application de sécurisation 15 est installée dans le système d'exploitation du terminal 10. C'est une application conforme à l'architecture HCE. En ce sens, l'application de sécurisation 15 est adaptée pour communiquer avec le lecteur NFC 12. Cette application de sécurisation 15 est également adaptée pour communiquer avec un élément de sécurité 14. Elle est commune à toutes les applications sensibles du terminal mobile 10 qui nécessitent la mise en oeuvre d'une sécurité de bout en bout entre le lecteur NFC et un serveur distant, conformément au procédé de sécurisation d'une transaction sans contact tel que décrit ci-dessous.

Un serveur 13 distant est destiné à mémoriser des données et fonctions sensibles de l'application de paiement pour un utilisateur abonné au service. Des données sensibles sont par exemple un numéro de compte bancaire, des données d'identification et d'authentification, etc. Une fonction sensible est par exemple une fonction de saisie d'un code d'identification personnel (ou code « PIN », pour « Personal Identification Number »). Ces données et l'exécution des fonctions sensibles sont requises par le lecteur NFC 12 lors de l'exécution de l'application de paiement 11 afin de mener à bien la transaction de paiement. Le déport des données et fonctions sensibles dans le serveur 13 est destiné à garantir un certain niveau de sécurité à l'application de paiement stockée dans le terminal mobile. Le serveur distant 13 est par exemple un serveur informatique d'une architecture d'informatique dans le nuage (le terme habituellement utilisé est le terme anglais « cloud computing »). Le terminal mobile 10 et le serveur distant 13 communiquent par exemple à travers le réseau Internet 16.

Le lecteur NFC 12 est situé dans un point de vente (le terme habituellement utilisé est le terme anglais « POS » pour « Point Of Sale »). Il est relié à un serveur marchand (non représentée) qui mémorise un module de paiement qui comprend des instructions de code pour mettre en oeuvre les étapes de l'application de paiement qui sont exécutées par le serveur marchand. Pour des raisons de clarté, seul le lecteur NFC 12 est représenté sur la figure. On suppose que les fonctions du serveur marchand sont mises en oeuvre au niveau du lecteur NFC 12. Du point de vue du lecteur NFC 12 et dans le contexte HCE, l'application de paiement 11 couplée à l'application de sécurisation 15 du terminal mobile 10 apparaît comme une carte de paiement.

On suppose par ailleurs que le serveur 13, respectivement le lecteur NFC 12, mémorisent une clé secrète de signature, Ksig_{Serv}, respectivement Ksig_{Reader}, destinées à être utilisée par un algorithme de signature afin de garantir l'intégrité d'informations transmises signées.

Le terminal mobile 10 comprend également un élément de sécurité 14 de type « UICC » (de l'anglais « Universal Integrated Circuit Card »), ou « eUICC » (pour « embedded », ou embarquée), par exemple une carte « (U)SIM » (pour « (Universal) Suscriber Identity Module ») de type carte SIM. L'élément de sécurité 14 est agencé pour mémoriser des données sensibles telles que des clés secrètes, des codes d'authentification, etc. On suppose que l'élément de sécurité 14 et le serveur 13 distant partagent la connaissance d'une clé secrète Kₛ. La clé secrète Kₛ a par exemple été préinstallée dans l'élément de sécurité 14 et dans le serveur distant 13 lors d'une phase préalable de configuration exécutée lorsque l'utilisateur s'est abonné à un ou des services sensibles proposés par un fournisseur de services qui propose entre autres l'application de paiement 11. Cette installation s'est faite selon une méthode connue non détaillée, par exemple au moyen d'une procédure « OTA » pour « Over The Air ». La clé secrète Kₛ propre à l'utilisateur détenteur du terminal mobile 10 est destinée à être utilisée par l'élément de sécurité 14 et par le serveur 13 pour générer un mot même de passe à usage unique destiné à être utilisé lors d'une authentification mutuelle entre le serveur 13 et l'élément de sécurité 14.

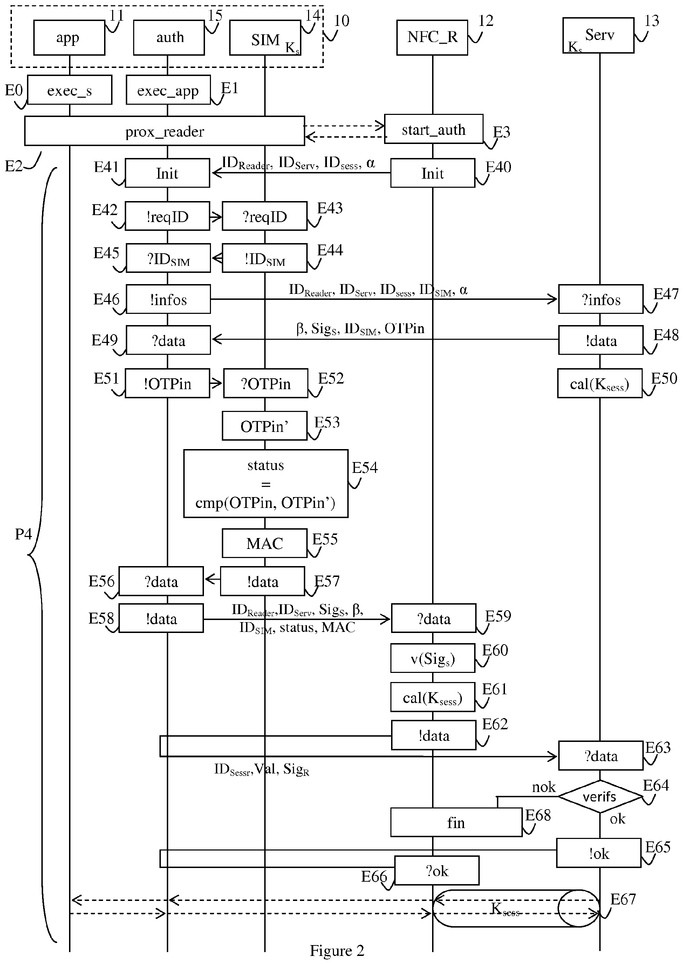

Les étapes d'un procédé de sécurisation d'une transaction sans contact, selon un premier exemple de réalisation vont maintenant être décrites en relation avec la figure 2.

Dans une étape initiale E0 d'exécution, l'utilisateur déclenche l'exécution du service de paiement 11 mémorisé dans son terminal mobile 10. Par exemple, l'utilisateur sélectionne le service de paiement 11 dans un menu.

Dans une étape suivante E1 d'activation de l'application de sécurisation, le service de paiement 11 déclenche l'exécution de l'application de sécurisation 15 mémorisée dans le terminal mobile 10. L'application de sécurisation 15 est commune à l'ensemble des services sans contact du terminal mobile 10. Son exécution ne peut être déclenchée que par un autre service sans contact du terminal mobile 10. L'application de sécurisation 15 est adaptée pour gérer la négociation de paramètres de sécurité entre le serveur distant 13 et le lecteur NFC 12 afin d'établir un canal sécurisé entre le lecteur NFC 12 et le serveur 13 de manière à garantir la sécurité des échanges de bout en bout entre ces deux entités. Elle est adaptée pour communiquer avec le lecteur NFC 12. En ce sens, l'application de sécurisation intégrée 15 est une application conforme à l'architecture HCE. Elle est perçue comme une carte sans contact par le lecteur NFC 12.

Dans une étape E2 de rapprochement, l'utilisateur approche son terminal 10 du lecteur NFC 12 dans le but de réaliser la transaction de paiement.

Dans un autre exemple de réalisation, dans l'étape E0 d'exécution, l'utilisateur approche son terminal mobile 10 du lecteur NFC 12. Cela déclenche l'envoi de premières commandes à l'application de sécurisation 15 par le lecteur NFC 12. Les commandes déclenchent l'activation automatique de l'application sans contact 11 sur le terminal mobile 10. Dans ce cas, les étapes E1 et E2 ne sont pas exécutées.

Dans une étape E3 de lancement de l'authentification, le lecteur NFC 12, qui a détecté la présence de l'application de sécurisation 15 lancée sur le terminal 10, commande l'exécution d'une authentification tripartite entre le lecteur NFC 12, le serveur distant 13 et l'élément de sécurité 14.

L'authentification tripartite s'exécute dans une phase suivante P4 d'authentification. Elle est décrite ici dans le cadre du protocole connu d'échange de clés Diffie-Hellman destinée à permettre au lecteur NFC 12 et au serveur distant 13 de partager une clé de session Kₛₑₛₛ pour sécuriser les échanges entre ces deux entités. L'invention n'est pas limitée à la méthode Diffie-Hellman. Une autre méthode d'échange de clés peut être utilisée.

Dans une étape initiale E40 de l'authentification, le lecteur NFC 12 envoie à l'application de sécurisation 15 un identifiant ID_{Reader}, un identifiant du serveur distant 13 ID_{Serv} avec lequel il souhaite établir une session sécurisée, un identifiant de session ID_{Sess} propre à la session courante, un élément public *α* destiné à être utilisé dans la méthode d'échange de clés pour générer la clé de session Kₛₑₛₛ. *α* est une première valeur de détermination de la clé de session Kₛₑₛₛ. De façon connue, selon le protocole Diffie-Hellman, l'élément public *α* est calculé par le lecteur NFC 12 au moyen d'un générateur de groupe *g* et d'une valeur *p* utilisée pour échanger les nombres selon un modulo. Par exemple, *α* = *g^{a} mod p,* où *a* est une valeur générée aléatoirement par le lecteur NFC 12. Ces informations sont reçues par l'application sécurisée 15 au cours d'une étape E41 de réception.

Dans une étape suivante E42 d'interrogation de l'élément de sécurité, l'application de sécurisation 15 envoie au module de sécurité 14 une requête d'identifiant afin d'obtenir un identifiant ID_{SIM} de l'élément de sécurité 14. Cet identifiant ID_{SIM} est par exemple un numéro public « MSISDN » (de l'anglais «Mobile Station ISDN Number »), ou numéro « connu du public » de l'utilisateur. L'identifiant ID_{SIM} est destiné à identifier l'utilisateur du terminal mobile 10 auprès du serveur distant 13 et à permettre à celui-ci de sélectionner la clé secrète Ks qu'il partage avec l'élément de sécurité 14. Dans un autre exemple de réalisation, l'identifiant ID_{SIM} peut-être défini initialement par le serveur 13 et mémorisé dans l'élément de sécurité 14 dans une phase d'abonnement au service. Dans un autre exemple, l'identifiant ID_{SIM} peut varier à chaque session et être calculé d'une part au niveau du serveur distant 13 et d'autre part au niveau de l'élément de sécurité 14 à partir de mêmes données initiales et d'un compteur incrémenté à chaque session de service. La requête d'identifiant est reçue par l'élément de sécurité 14 au cours d'une étape E43 de réception.

L'élément de sécurité 14 envoie son identifiant ID_{SIM} dans une étape E44 de réponse. L'identifiant ID_{SIM} est reçu par l'application 15 dans une étape E45 de réception.

Dans une étape E46 de retransmission, l'application de sécurisation 15 envoie l'ensemble des informations qu'elle a reçues du lecteur NFC 12 au cours de l'étape E41 et de l'élément de sécurité 14 au cours de l'étape E45 au serveur distant 13. L'application de sécurisation 15 identifie le serveur 13 à partir de l'identifiant ID_{Serv}. L'envoi des informations se fait par exemple à travers le réseau Internet. L'identifiant ID_{Serv} du serveur 13 est par exemple une adresse Internet, une URL, etc. En d'autres termes, l'application de sécurisation 15 envoie (ID_{Reader}, ID_{Serv}, ID_{Sess}, *α*, ID_{SIM}) au serveur 13. Ces informations sont reçues par le serveur 13 au cours d'une étape E47 de réception.

Dans une étape suivante E48 de réponse, le serveur 13 :
- calcule un deuxième élément public *β* destiné à être utilisé dans le protocole d'échange de clés Diffie-Hellman. Par exemple, *β* = *g^{b} mod p,* où *b* est une valeur générée aléatoirement par le serveur 13 ;
- génère une signature numérique Sigₛ des données reçues de l'application intégrée 15 au cours de l'étape E47 de réception et du deuxième élément public *β*. En d'autres termes, le serveur 13 signe (ID_{Reader}, ID_{Serv}, ID_{Sess}, *α*, ID_{SIM}, *β*) au moyen d'une clé secrète de signature Ksigₛₑᵣᵥ connue uniquement du serveur 13. La signature est destinée à garantir l'intégrité des données reçues et du deuxième élément public *β* ;
- génère un secret à usage unique OTPin. Dans un exemple de réalisation, le secret OTPin est destiné à n'être utilisé que pour une authentification courante entre le serveur 13 et l'élément de sécurité 14. Dans un exemple de réalisation, le secret à usage unique OTPin est obtenu en chiffrant au moyen de la clé secrète Kₛ partagée entre le serveur 13 et l'élément de sécurité 14, une valeur résultant de la concaténation de l'identifiant de l'élément de sécurité ID_{SIM}, d'une valeur de compteur, incrémentée à chaque nouvelle session de service et d'une valeur de contrôle (le terme habituellement utilisé est le terme anglais « checksum »). Le compteur est connu également de l'élément de sécurité 14 et initialisé à la même valeur.

Ces éléments sont envoyés par le serveur 13 à l'application de sécurisation 15 en fin d'étape E48 de réponse.

Ils sont reçus par l'application de sécurisation 15 dans une étape E49 de réception.

Dans une étape E50 de calcul de clé, le serveur 13 calcule la clé de session Kₛₑₛₛ à partir des valeurs de détermination de la clé de session α et β. Ainsi, selon le protocole Diffie-Hellman, la clé de session *Ksess* = *α^{b} mod p,* où *α* a été reçu du lecteur par l'intermédiaire de l'application de sécurisation 15 et où *b* et *p* ont été utilisés pour calculer *β*.

Dans une étape suivante E51 d'envoi du secret à usage unique, l'application intégrée 15 envoie le secret à usage unique OTPin au module de sécurité 14. Il est reçu par l'élément de sécurité 14 dans une étape E52 de réception.

Sur réception du secret à usage unique OTPin, l'élément de sécurité 14 génère dans une étape E53 de génération de secret un deuxième secret à usage unique OTPin' à partir des mêmes données que celles utilisées par le serveur 13, c'est-à-dire à partir de la clé secrète Kₛ qu'il partage avec le serveur distant 13, de la valeur du compteur et de la valeur de contrôle.

Dans une étape E54 de comparaison, l'élément de sécurité 14 compare le premier secret à usage unique OTPin reçu de l'application de sécurisation 15 au deuxième secret à usage unique OTPin' qu'il a calculé. Le résultat de cette comparaison correspond à un statut d'authentification status. En effet, si le secret à usage unique OTPin calculé par le serveur 13 est égal au deuxième secret à usage unique OTPin' calculé par l'élément de sécurité 14, cela signifie que l'authentification du serveur 13 auprès du module de sécurité 14 a réussi ; dans ce cas le statut status est positif. Dans le cas contraire, c'est-à-dire lorsque les premier et deuxième secrets sont différents, l'authentification du serveur 13 auprès de l'élément de sécurité 14 a échoué ; dans ce cas, le statut d'authentification status est négatif. A noter que dans le cas où le statut d'authentification status est négatif, il n'est pas mis fin à la transaction. En effet, c'est au serveur distant de prendre la décision d'arrêter la transaction en cours car il est le seul à pouvoir vérifier l'intégrité du statut d'authentification status.

Dans une étape suivante E55 de génération et d'envoi d'un code d'authentification, l'élément de sécurité 14 génère un message d'authentification MAC pour un ensemble de données comprenant le mot de passe à usage unique OPTin, l'identifiant de session IDₛₑₛₛ et le statut d'authentification status. Par exemple, il applique l'algorithme HMAC (de l'anglais « Keyed-hashed Message Authentication Code) à cet ensemble de données et calcule HMAC_{Ks}(OTPin, IDsess, status) au moyen de la clé secrète Kₛ qu'il partage avec le serveur distant 13.

Dans une étape suivante E58 d'envoi, l'application de sécurisation 14 envoie la valeur d'authentification MAC et le statut d'authentification status à l'application de sécurisation 15. La valeur MAC et le statut status sont reçus par l'application de sécurisation dans une étape E57 de réception.

Dans une étape E58 d'envoi de données, l'application de sécurisation 15 envoie au lecteur NFC 12 l'identifiant du lecteur ID_{Reader}, l'identifiant du serveur ID_{Serv}, l'identifiant ID_{SIM} du module de sécurité 14, le deuxième élément public *β*, la signature Sigₛ reçue du serveur 13 au cours de l'étape E49, le statut d'authentification status et le code d'authentification MAC reçus au cours de l'étape E57 . Ces données sont reçues par le lecteur 12 au cours d'une étape E59 de réception.

Dans une étape E60 de vérification de signature, le lecteur NFC 12 vérifie la signature Sigₛ au moyen de la clé publique associée à la clé de signature Ksig_{Serv} du serveur.

Dans une étape E61 de calcul de la clé de session, le lecteur NFC 12 calcule la clé de session Kₛₑₛₛ à partir des premier et deuxième éléments publics α et β. Selon la méthode d'échange de clés Diffie Hellman, la clé de session *Ksess* = *β^{a} mod p.*

Dans une étape suivante E62 d'envoi, le lecteur NFC 12 envoie au serveur distant 13, par l'intermédiaire de l'application de sécurisation 15 :
- l'identifiant de la session courante IDₛₑₛₛ,
- une valeur secrète Val obtenue en chiffrant la concaténation du code d'authentification MAC et du statut d'authentification status au moyen de la clé de session Kₛₑₛₛ. En d'autres termes, Val= Enc_{Ksess}(MAC ∥ status). Cette valeur secrète Val est destinée à réduire les possibilités d'attaque par relais. En effet, la valeur est obtenue par chiffrement au moyen de la clé de session Kₛₑₛₛ qui est calculée d'une part par le lecteur 12 et d'autre part par le serveur 13. Un attaquant distant ne peut demander au lecteur de chiffrer un message d'authentification qu'il aurait généré. En effet, on estime que le lecteur NFC doit être suffisamment proche du terminal mobile 10 lors de la transaction, ce qui rend difficile ce genre d'attaque si l'attaquant n'a pas pris le contrôle de l'application de sécurisation 15 ;
- une signature Sig_{R} obtenue en signant ID_{reader}, ID_{Serv}, ID_{SIM}, ID_{Sess}, *α* et *β* au moyen d'une clé secrète KSig_{Reader} propre au lecteur. Le but de cette signature est d'assurer au serveur que le lecteur NFC 12 a reçu et envoyé la bonne information.

Ces informations, relayées par l'application de sécurisation 15 sont reçues par le serveur 13 dans une étape E63 de réception. A noter que les communications entre le lecteur 12 et le serveur 13 transitent systématiquement par l'application de sécurisation 15.

Dans une étape E64 de vérification, le serveur 13 vérifie la signature Sig_{R} reçue au moyen de la clé publique associée à la clé secrète Ksig_{Reader} du lecteur NFC 12, afin d'authentifier le lecteur NFC 12. Il vérifie également le message d'authentification MAC pour s'assurer que le secret à usage unique OTPin et le statut d'authentification status n'ont pas été altérés. Il vérifie également que le statut d'authentification status est positif, ce qui indique que l'authentification avec l'élément de sécurité 14 a réussi. La vérification du message d'authentification MAC permet au serveur 13 d'authentifier le module de sécurité 14. Ainsi, à ce stade, si le statut d'authentification status est positif, l'authentification mutuelle entre l'élément de sécurité 14 et le serveur distant 13 est réalisée. La vérification de la signature du message Sig_{R} permet au serveur 13 d'authentifier le lecteur 12.

Dans un premier cas où les vérifications sont concluantes (branche « ok » sur la figure 2), le serveur 13, dans une étape E65 de confirmation, envoie au lecteur NFC 12 via l'application de sécurisation 15 un message de confirmation indiquant que tout est correct. Le message de confirmation est reçu par le lecteur NFC 12 dans une étape E66 de réception. A partir de cet instant et pour la session IDₛₑₛₛ courante, les échanges entre le serveur 13 et le lecteur NFC 12 se font à travers un canal sécurisé au moyen de la clé de session Kₛₑₛₛ dans une étape E67 de communication. Dans un deuxième cas où l'une des vérifications est négative (branche « nok » sur la figure 2), alors le serveur 13 envoie un message d'échec au lecteur NFC 12 au cours d'une étape E68 de fin, indiquant que la transaction est refusée.

Dans l'étape de communication E67, le serveur 13 peut envoyer un message au terminal mobile 10 dans le cadre de l'exécution du service de paiement 11. Par exemple, le serveur envoie un message d'information à l'attention de l'utilisateur, ou un message demandant à l'utilisateur de saisir une donnée. Dans ce cas, le serveur 13 envoie ce message au lecteur sans contact 12, à travers le canal sécurisé. Le lecteur 12 transmet ce message à l'application de sécurisation 15, qui le transmet à son tour au service de paiement 11 du terminal 10, comme illustré par les flèches en pointillés.

De même, lorsque le service nécessite la saisie par l'utilisateur d'une donnée, par exemple un code d'identification personnel (code «PIN» pour «Personal Identification Number » en anglais), celui-ci, une fois saisie par l'utilisateur, est transmise par le service de paiement 11 à l'application de sécurisation 15 qui la transmet à son tour au lecteur NFC 12.

Le lecteur NFC 12 envoie alors le code PIN au serveur 13 à travers le canal sécurisé. Ainsi, l'échange de données entre le serveur et le service est toujours sécurisé.

Ainsi, toute la partie sensible de l'application de paiement 11 est mise en oeuvre au niveau du serveur distant 13. L'application de paiement 11 située au niveau du terminal mobile 10 est sollicitée pour informer l'utilisateur ou interagir avec lui.

Le procédé de sécurisation de transactions sans contact est décrit ici dans le cadre d'un service de paiement. Le procédé ne se limite pas à ce type de service et peut s'appliquer à tout service qui manipule des données et des fonctions sensibles, tel que des services sans contact relatifs à des titres de transport, des services relatifs à la gestion de cartes de fidélité, des services d'identification, etc.

Une description fonctionnelle d'un terminal mobile 10 selon un premier exemple de réalisation va maintenant être fournie en relation avec la figure 3.

Le terminal mobile 10 est un terminal intelligent, ou smartphone en anglais, conforme à une architecture HCE. Conformément à l'architecture HCE, le terminal mobile 10 émule une carte sans contact et héberge au niveau du système d'exploitation des applications sans contact. Le terminal 10 communique directement avec un lecteur sans contact 12 situé à proximité via des interfaces sans contact.

Le terminal mobile 10 comprend :
- une unité de traitement 101, ou « CPU » pour « Central Processing Unit »,
- un ensemble de mémoires, dont une mémoire volatile 102 et une mémoire morte 103 de type « ROM » (de l'anglais « Read Only Memory ») et une mémoire de stockage 104 de type mémoire flash ou « EEPROM » (pour « Electrically-Erasable Programmable Read Only Memory). La mémoire volatile 102 est agencée pour exécuter des instructions de code, stocker des variables, etc. La mémoire de stockage 104 est agencée pour mémoriser des données. En particulier, la mémoire de stockage 104 mémorise des applications sans contact, par exemple l'application de paiement 11 et l'application de sécurisation 15 qui comprend des instructions de code pour mettre en oeuvre les étapes du procédé de sécurisation d'une transaction sans contact tel que décrit précédemment ;
- un élément de sécurité 14. Dans un exemple de réalisation, l'élément de sécurité 14 est une carte d'identité d'abonné, ou carte SIM. L'élément de sécurité 14 est agencé pour mémoriser des données sensibles telles que des clés secrètes, des codes d'authentification, etc. L'élément de sécurité 14 mémorise une clé secrète Kₛ, dont il partage la connaissance avec le serveur distant 13 (non représenté sur la figure 3). La clé secrète Kₛ a par exemple été préinstallée dans l'élément de sécurité 14 et dans le serveur distant 13 lors d'une phase préalable de configuration exécutée lorsque l'utilisateur s'est abonné à un ou des services proposés par le fournisseur du service de paiement 11. La clé secrète Kₛ est destinée à être utilisée par l'élément de sécurité 14 et par le serveur 13 pour générer un mot de passe à usage unique OTPin destiné à être utilisé lors d'une authentification mutuelle entre le serveur 13 et l'élément de sécurité 14.

Le terminal mobile 10 comprend également :
- un premier module de réception 105, agencé pour recevoir du lecteur sans contact une première valeur (a) de détermination d'une clé de session. Le premier module de réception 104 est agencé pour mettre en oeuvre l'étape E41 du procédé de sécurisation d'une transaction décrit précédemment ;
- un deuxième module de réception 106, agencé pour recevoir en provenance du serveur, une deuxième valeur de détermination d'une clé de session β et un premier mot de passe à usage unique OTPin calculé par le serveur au moyen d'une clé secrète Kₛ partagée avec l'élément de sécurité. Le deuxième module de réception 106 est agencé pour mettre en oeuvre l'étape E49 du procédé décrit précédemment ;
- un module d'envoi 107, agencé pour envoyer au lecteur sans contact la deuxième valeur β de détermination d'une clé de session et le message d'authentification MAC généré à partir d'au moins le premier mot de passe à usage unique, ledit message d'authentification étant destiné à être vérifié par le serveur et lesdites première et deuxième valeurs de détermination étant utilisées par le serveur et par le lecteur pour calculer la clé de session Kₛₑₛₛ, ladite clé étant destinée à être utilisée pour sécuriser les échanges entre le lecteur et le serveur. Le module d'envoi 106 est agencé pour mettre en oeuvre l'étape E58 du procédé décrit précédemment. Le terminal mobile 10 comprend également les modules suivants, non représentés sur la figure 2 :

- un module d'obtention d'un statut, agencé pour obtenir du module de sécurité un statut d'authentification, ledit statut étant obtenu en comparant le premier mot de passe à usage unique avec un deuxième mot de passe à usage unique calculé par le module de sécurité au moyen de la clé secrète partagée avec le serveur, le statut étant positif lorsque les premier et deuxième mots de passe à usage unique sont identiques, le statut étant également utilisé par le module de sécurité pour le calcul du message d'authentification. Le module d'obtention d'un statut est agencé pour mettre en oeuvre d'étape E56 du procédé décrit précédemment ;
- un module de réception et de retransmission d'une valeur secrète, agencé pour recevoir du lecteur et retransmettre au serveur une valeur secrète Val obtenue en chiffrant le message d'authentification et le statut d'authentification au moyen de la clé de session.

Les modules décrit ci-dessus et notamment les premier 105 et deuxième 106 modules de réception et le module d'envoi 107 sont de préférence des modules logiciels comprenant des instructions de code logicielles pour faire exécuter celles des étapes du procédé de sécurisation d'une transaction qui sont exécutées par l'application de sécurisation.

L'invention concerne donc aussi :
- un programme d'ordinateur comportant des instructions pour la mise en oeuvre du procédé de sécurisation d'une transaction sans contact tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette ou un disque dur, ou bien un support de transmission tel qu'un signal ou un réseau de télécommunications.

L'invention porte également sur un système de sécurisation des transactions sans contact. Le système comprend un terminal mobile tel que décrit précédemment, et :
- le lecteur sans contact 12, adapté pour communiquer via des interfaces sans contact avec l'application de sécurisation du terminal mobile. Le lecteur est également adapté pour effectuer des traitements et comprend un module de paiement sous forme de code logiciel qui comprend des instructions pour mettre en oeuvre les étapes de l'application de paiement qui sont exécutées par le lecteur. Le lecteur comprend :
   - un module d'envoi, agencé pour envoyer à l'application de sécurisation la première valeur de détermination de la clé de session,
   - un module de réception, agencé pour recevoir la deuxième valeur de détermination de la clé de session,
   - un module de calcul de la clé de session, agencé pour calculer la clé de session à partir des première et deuxième valeurs de détermination de la clé de session.

Le système de sécurisation comprend également le serveur distant 13, adapté pour mémoriser au moins une donnée et/ou fonction sensible de l'application de paiement. Le serveur comprend :
- un module d'envoi, agencé pour envoyer au terminal mobile la première valeur de détermination de la clé de session,
- un module de calcul et d'envoi, agencé pour calculer le premier mot de passe à usage unique et l'envoyer à l'application de sécurisation,
- un module de calcul, agencés pour calculer la clé de session,
- un module de réception et de vérification agencé pour recevoir le message d'authentification et pour le vérifier.

Les modules du lecteur sans contact, respectivement du serveur tels que présentés ci-dessus sont de préférence des modules logiciels comprenant des instructions de code pour faire exécuter celles des étapes du procédé de sécurisation d'une transaction qui sont exécutées par le lecteur sans contact, respectivement par le serveur.

## Revendications

1. Procédé de sécurisation d'une transaction d'un service sans contact, ledit service (11) étant mémorisé dans un terminal mobile (10), ladite transaction impliquant le terminal mobile, un lecteur sans contact (12) et un serveur distant (13), ledit serveur mémorisant au moins une donnée ou/et fonction sensible du service nécessaire à l'exécution de la transaction, ledit terminal comprenant un module de sécurité (14), ledit procédé étant **caractérisé en ce que** le terminal mémorise également une application sans contact de sécurisation (15) et qu'il comprend les étapes suivantes, mises en oeuvre par le terminal mobile :
- réception (E41) par l'application de sécurisation, en provenance du lecteur sans contact d'une première valeur (α) de détermination d'une clé de session,
- réception (E49), en provenance du serveur, d'une deuxième valeur de détermination d'une clé de session (β) et d'un premier mot de passe à usage unique (OTPin) calculé par le serveur au moyen d'une clé secrète (Kₛ) partagée avec l'élément de sécurité, ledit premier mot de passe à usage unique étant envoyé (E51) au module de sécurité,
- envoi (E58) au lecteur sans contact de la deuxième valeur de détermination d'une clé de session et d'un message d'authentification (MAC) d'au moins le premier mot de passe à usage unique, ledit message d'authentification étant destiné à être vérifié par le lecteur et lesdites première et deuxième valeurs de détermination étant utilisées par le serveur et par le lecteur pour calculer (E50, E61) une clé de session (Kₛₑₛₛ), ladite clé étant destinée à être utilisée pour sécuriser les échanges entre le lecteur et le serveur.

2. Procédé de sécurisation d'une transaction selon la revendication 1, comprenant une étape d'obtention (E56) du module de sécurité d'un statut d'authentification, ledit statut étant obtenu en comparant le premier mot de passe à usage unique avec un deuxième mot de passe à usage unique calculé par le module de sécurité au moyen de la clé secrète partagée avec le serveur, le statut étant positif lorsque les premier et deuxième mots de passe à usage unique sont identiques, le statut étant également utilisé par l'élément de sécurité pour le calcul du message d'authentification.

3. Procédé de sécurisation d'une transaction selon la revendication 1, comprenant en outre une étape de réception du lecteur et retransmission au serveur d'une valeur secrète (Val) obtenue en chiffrant le message d'authentification et le statut d'authentification au moyen de la clé de session.

4. Procédé de sécurisation d'une transaction selon l'une des revendications précédentes, comprenant en outre les étapes suivantes :
- réception (E49), en provenance du serveur, d'une première signature calculée à partir d'au moins un identifiant de l'élément de sécurité et d'une clé de signature propre au serveur,
- envoi (E58) de ladite signature au lecteur,
- réception (E62) du lecteur et retransmission (E63) au serveur d'une deuxième signature calculée à partir d'au moins l'identifiant du module de sécurité et d'une clé de signature propre au lecteur.

5. Procédé de sécurisation d'une transaction selon l'une des revendications précédentes dans lequel le mot de passe à usage unique est calculé en chiffrant au moyen d'une clé secrète (Kₛ) partagée par l'élément de sécurité et le serveur un compteur incrémenté à chaque session.

6. Procédé de sécurisation d'une transaction selon l'une des revendications précédentes, comprenant, lorsque les échanges entre le lecteur et le serveur sont chiffrés au moyen de la clé de session, les étapes suivantes :
- réception en provenance du lecteur d'un message d'information propre au service et destiné à un utilisateur du terminal, ledit message ayant été envoyé du serveur au lecteur,
- envoi dudit message au service, ledit message étant affiché sur une interface utilisateur du terminal.

7. Procédé de sécurisation d'une transaction selon l'une des revendications précédentes, comprenant, une fois que les échanges entre le lecteur et le serveur sont chiffrés au moyen de la clé de session, les étapes suivantes :
- réception en provenance du service d'une donnée saisie par l'utilisateur, ladite donnée ayant été requise par le serveur,
- envoi de la donnée saisie au lecteur sans contact, ladite donnée saisie étant destinée à être transmise au serveur.

8. Terminal mobile adapté pour la sécurisation d'une transaction d'un service sans contact, ledit terminal mémorisant ledit service sans contact, ladite transaction impliquant le terminal mobile, un lecteur sans contact (12) et un serveur distant (13), ledit serveur mémorisant au moins une donnée et/ou fonction sensible du service nécessaire à l'exécution de la transaction, ledit terminal comprenant un module de sécurité (14), ledit terminal étant **caractérisé en ce qu'**il mémorise une application de sécurisation (15) et qu'il comprend en outre :
- des premiers moyens de réception (105), agencés pour recevoir du lecteur sans contact une première valeur (α) de détermination d'une clé de session,
- des deuxièmes moyens de réception (106), agencés pour recevoir en provenance du serveur, une deuxième valeur de détermination d'une clé de session (β) et un premier mot de passe à usage unique (OTPin) calculé par le serveur au moyen d'une clé secrète (Kₛ) partagée avec l'élément de sécurité,
- des moyens d'envoi (107), agencés pour envoyer au lecteur sans contact la deuxième valeur de détermination d'une clé de session et un message d'authentification (MAC) d'au moins le premier mot de passe à usage unique, ledit message d'authentification étant destiné à être vérifié par le serveur et lesdites première et deuxième valeurs de détermination étant utilisées par le serveur et par le lecteur pour calculer une clé de session (Kₛₑₛₛ), ladite clé étant destinée à être utilisée pour sécuriser les échanges entre le lecteur et le serveur.

9. Système de sécurisation d'une transaction d'un service sans contact, comprenant un terminal mobile selon la revendication 8 et :
- un lecteur sans contact (12) adapté pour communiquer avec l'application de sécurisation du terminal mobile, et comprenant :
- des moyens d'envoi, agencés pour envoyer à l'application de sécurisation la première valeur de détermination de la clé de session,
- des moyens de réception, agencés pour recevoir la deuxième valeur de détermination de la clé de session,
- des moyens de calcul de la clé de session, agencés pour calculer la clé de session à partir des première et deuxième valeurs de détermination de la clé de session,
- un serveur distant (13) adapté pour mémoriser au moins une donnée et/ou fonction sensible de l'application de paiement et comprenant :
- des moyens d'envoi, agencés pour envoyer au terminal mobile la première valeur de détermination de la clé de session,
- des moyens de calcul et d'envoi, agencés pour calculer le premier mot de passe à usage unique et l'envoyer à l'application de sécurisation,
- des moyens de calcul, agencés pour calculer la clé de session,
- des moyens de réception et de vérification agencés pour recevoir le message d'authentification et pour le vérifier.

10. Programme d'ordinateur sur un support de données et chargeable dans la mémoire d'un terminal mobile, le programme comprenant des instructions de code pour l'exécution des étapes du procédé de sécurisation d'une transaction d'un servie sans contact selon l'une des revendications 1 à 7, lorsque le programme est exécuté sur ledit terminal mobile.

11. Support de données dans lequel est enregistré le programme selon la revendication 10.

## Patentansprüche

1. Verfahren zur Sicherung einer Transaktion eines kontaktlosen Dienstes, wobei der Dienst (11) in einem mobilen Endgerät (10) gespeichert ist, wobei an der Transaktion das mobile Endgerät, ein kontaktloser Leser (12) und ein entfernter Server (13) beteiligt sind, wobei der Server wenigstens ein sensibles Datenelement und/oder eine sensible Funktion des Dienstes speichert, das bzw. die für die Ausführung der Transaktion benötigt wird, wobei das Endgerät ein Sicherheitsmodul (14) umfasst, wobei das Verfahren **dadurch gekennzeichnet ist, dass** das Endgerät außerdem eine kontaktlose Sicherungsanwendung (15) speichert, und dass es die folgenden Schritte umfasst, die von dem mobilen Endgerät ausgeführt werden:
- Empfang (E41), durch die Sicherungsanwendung von dem kontaktlosen Leser, eines ersten Wertes (α) zur Bestimmung eines Sitzungsschlüssels,
- Empfang (E49), von dem Server, eines zweiten Wertes (β) zur Bestimmung eines Sitzungsschlüssels und eines ersten Passwortes zur einmaligen Verwendung (OTPin), das von dem Server mittels eines geheimen Schlüssels (Kₛ) berechnet wurde, der mit dem Sicherheitselement gemeinsam benutzt wird, wobei das erste Passwort zur einmaligen Verwendung an das Sicherheitsmodul gesendet (E51) wird,
- Senden (E58), an den kontaktlosen Leser, des zweiten Wertes zur Bestimmung eines Sitzungsschlüssels und einer Nachricht zur Authentifizierung (MAC) wenigstens des ersten Passwortes zur einmaligen Verwendung, wobei die Authentifizierungsnachricht dazu bestimmt ist, von dem Leser überprüft zu werden, und wobei der erste und der zweite Wert zur Bestimmung von dem Server und von dem Leser verwendet werden, um einen Sitzungsschlüssel (Kₛₑₛₛ) zu berechnen (E50, E61), wobei der Schlüssel dazu bestimmt ist, verwendet zu werden, um die Austauschvorgänge zwischen dem Leser und dem Server zu sichern.

2. Verfahren zur Sicherung einer Transaktion nach Anspruch 1, welches einen Schritt des Erhaltens (E56), von dem Sicherheitsmodul, eines Authentifizierungsstatus umfasst, wobei dieser Status erhalten wird, indem das erste Passwort zur einmaligen Verwendung mit einem zweiten Passwort zur einmaligen Verwendung verglichen wird, das von dem Sicherheitsmodul mittels des mit dem Server gemeinsam benutzten geheimen Schlüssels berechnet wurde, wobei der Status positiv ist, wenn das erste und das zweite Passwort zur einmaligen Verwendung identisch sind, wobei der Status außerdem von dem Sicherheitselement zur Berechnung der Authentifizierungsnachricht verwendet wird.

3. Verfahren zur Sicherung einer Transaktion nach Anspruch 1, welches außerdem einen Schritt des Empfangs, von dem Leser, und der Weiterübertragung, zum Server, eines geheimen Wertes (Val), der erhalten wird, indem die Authentifizierungsnachricht und der Authentifizierungsstatus mittels des Sitzungsschlüssels verschlüsselt werden, umfasst.

4. Verfahren zur Sicherung einer Transaktion nach einem der vorhergehenden Ansprüche, welches außerdem die folgenden Schritte umfasst:
- Empfang (E49), von dem Server, einer ersten Signatur, die aus wenigstens einer Kennung des Sicherheitselemente und einem dem Server eigenen Signaturschlüssel berechnet wurde,
- Senden (E58) der Signatur an den Leser,
- Empfang (E62), von dem Leser, und Weiterübertragung (E63), zum Server, einer zweiten Signatur, die aus wenigstens der Kennung des Sicherheitsmoduls und einem dem Leser eigenen Signaturschlüssel berechnet wurde.

5. Verfahren zur Sicherung einer Transaktion nach einem der vorhergehenden Ansprüche, wobei das Passwort zur einmaligen Verwendung berechnet wird, indem mittels eines geheimen Schlüssels (Kₛ), der von dem Sicherheitselement und dem Server gemeinsam verwendet wird, ein Zähler verschlüsselt wird, der bei jeder Sitzung inkrementiert wird.

6. Verfahren zur Sicherung einer Transaktion nach einem der vorhergehenden Ansprüche, welches, wenn die Austauschvorgänge zwischen dem Leser und dem Server mittels des Sitzungsschlüssels verschlüsselt werden, die folgenden Schritte umfasst:
Empfang, von dem Leser, einer Informationsnachricht, die dem Dienst eigen ist und für einen Benutzer des Endgerätes bestimmt ist, wobei diese Nachricht von dem Server an den Leser gesendet worden ist,
- Senden der Nachricht an den Dienst, wobei die Nachricht auf einer Benutzerschnittstelle des Endgerätes angezeigt wird.

7. Verfahren zur Sicherung einer Transaktion nach einem der vorhergehenden Ansprüche, welches, nachdem die Austauschvorgänge zwischen dem Leser und dem Server mittels des Sitzungsschlüssels verschlüsselt sind, die folgenden Schritte umfasst:
- Empfang, von dem Dienst, eines durch den Benutzer erfassten Datenelements, wobei dieses Datenelement durch den Server angefordert worden ist,
- Senden des erfassten Datenelements an den kontaktlosen Leser, wobei das erfasste Datenelement dazu bestimmt ist, zu dem Server übertragen zu werden.

8. Mobiles Endgerät, welches für die Sicherung einer Transaktion eines kontaktlosen Dienstes geeignet ist, wobei das Endgerät den kontaktlosen Dienst speichert, wobei an der Transaktion das mobile Endgerät, ein kontaktloser Leser (12) und ein entfernter Server (13) beteiligt sind, wobei der Server wenigstens ein sensibles Datenelement und/oder eine sensible Funktion des Dienstes speichert, das bzw. die für die Ausführung der Transaktion benötigt wird, wobei das Endgerät ein Sicherheitsmodul (14) umfasst, wobei das Endgerät **dadurch gekennzeichnet ist, dass** es eine Sicherungsanwendung (15) speichert und dass es außerdem umfasst:
- erste Empfangsmittel (105), die dafür ausgelegt sind, von dem kontaktlosen Leser einen ersten Wert (α) zur Bestimmung eines Sitzungsschlüssels zu empfangen,
- zweite Empfangsmittel (106), die dafür ausgelegt sind, von dem Server einen zweiten Wert (β) zur Bestimmung eines Sitzungsschlüssels und ein erstes Passwortes zur einmaligen Verwendung (OTPin), das von dem Server mittels eines geheimen Schlüssels (Kₛ) berechnet wurde, der mit dem Sicherheitselement gemeinsam benutzt wird, zu empfangen,
- Sendemittel (107), die dafür ausgelegt sind, an den kontaktlosen Leser den zweiten Wert zur Bestimmung eines Sitzungsschlüssels und eine Nachricht zur Authentifizierung (MAC) wenigstens des ersten Passwortes zur einmaligen Verwendung zu senden, wobei die Authentifizierungsnachricht dazu bestimmt ist, von dem Server überprüft zu werden, und wobei der erste und der zweite Wert zur Bestimmung von dem Server und von dem Leser verwendet werden, um einen Sitzungsschlüssel (Kₛₑₛₛ) zu berechnen, wobei der Schlüssel dazu bestimmt ist, verwendet zu werden, um die Austauschvorgänge zwischen dem Leser und dem Server zu sichern.

9. System zur Sicherung einer Transaktion eines kontaktlosen Dienstes, welches ein mobiles Endgerat nach Anspruch 8 umfasst, sowie:
- einen kontaktlosen Leser (12), der dafür eingerichtet ist, mit der Sicherungsanwendung des mobilen Endgerätes zu kommunizieren, und umfasst:
- Sendemittel, die dafür ausgelegt sind, an die Sicherungsanwendung den ersten Wert zur Bestimmung des Sitzungsschlüssels zu senden,
- Empfangsmittel, die dafür ausgelegt sind, den zweiten Wert zur Bestimmung des Sitzungsschlüssels zu empfangen,
- Mittel zur Berechnung des Sitzungsschlüssels, die dafür ausgelegt sind, den Sitzungsschlüssel aus dem ersten und zweiten Wert zur Bestimmung des Sitzungsschlüssels zu berechnen,
- einen entfernten Server (13), der dafür eingerichtet ist, wenigstens ein sensibles Datenelement und/oder eine sensible Funktion der Zahlungsanwendung zu speichern, und umfasst:
- Sendemittel, die dafür ausgelegt sind, an das mobile Endgerät den ersten Wert zur Bestimmung des Sitzungsschlüssels zu senden,
- Berechnungs- und Sendemittel, die dafür ausgelegt sind, das erste Passwort zur einmaligen Verwendung zu berechnen und es an die Sicherungsanwendung zu senden,
- Berechnungsmittel, die dafür ausgelegt sind, den Sitzungsschlüssel zu berechnen,
- Empfangs- und Überprüfungsmittel, die dafür ausgelegt sind, die Authentifizierungsnachricht zu empfangen und sie zu überprüfen.

10. Computerprogramm auf einem Datenträger, das in den Speicher eines mobilen Endgerätes ladbar ist, wobei das Programm Codeanweisungen zur Ausführung der Schritte des Verfahrens zur Sicherung einer Transaktion eines kontaktlosen Dienstes nach einem der Ansprüche 1 bis 7, wenn das Programm auf dem mobilen Endgerät ausgeführt wird, umfasst.

11. Datenträger, auf welchem das Programm nach Anspruch 10 aufgezeichnet ist.

## Claims

1. Method for securing a transaction of a contactless service, said service (11) being stored in a mobile terminal (10), said transaction involving the mobile terminal, a contactless reader (12) and a remote server (13), said server storing at least one sensitive piece of data and/or function of the service necessary for the execution of the transaction, said terminal comprising a security module (14), said method being **characterized in that** the terminal also stores a contactless security application (15) and **in that** it comprises the following steps, executed by the mobile terminal:
- a first value (α) for determining a session key is received (E41) by the security application from the contactless reader,
- a second value for determining a session key (β) and a first one-time password (OTPin) calculated by the server by means of a secret key (Kₛ) shared with the security element are received (E49) from the server, said first one-time password being sent (E51) to the security module,
- the second value for determining a session key, and an authentication message (MAC) for authenticating at least the first one-time password, are sent (E58) to the contactless reader, said authentication message being intended to be verified by the reader and said first and second determination values being used by the server and by the reader to calculate (E50, E61) a session key (Kₛₑₛₛ), said key being intended to be used to secure the exchanges between the reader and the server.

2. Method for securing a transaction according to Claim 1, comprising a step of obtaining (E56) an authentication status from the security module, said status being obtained by comparing the first one-time password with a second one-time password calculated by the security module by means of the secret key shared with the server, the status being positive if the first and second one-time passwords are identical, the status also being used by the security element for calculating the authentication message.

3. Method for securing a transaction according to Claim 1, further comprising a step of receiving from the reader, and retransmitting to the server, a secret value (Val) obtained by encrypting the authentication message and the authentication status by means of the session key.

4. Method for securing a transaction according to any of the preceding claims, further comprising the following steps:
- receiving (E49) from the server a first signature calculated on the basis of at least one identifier of the security element and a signature key belonging to the server,
- sending (E58) said signature to the reader,
- receiving (E62) from the reader, and retransmitting (E63) to the server, a second signature calculated on the basis of at least the identifier of the security module and a signature key belonging to the server.

5. Method for securing a transaction according to any of the preceding claims, wherein the one-time password is calculated by encrypting, by means of a secret key (Kₛ) shared by the security element and the server, a counter which is incremented at each session.

6. Method for securing a transaction according to any of the preceding claims, comprising, if the exchanges between the reader and the server are encrypted by means of the session key, the following steps:
- receiving from the reader an information message belonging to the service and intended for a user of the terminal, said message having been sent from the server to the reader,
- sending said message to the service, said message being displayed on a user interface of the terminal.

7. Method for securing a transaction according to any of the preceding claims, comprising, when the exchanges between the reader and the server have been encrypted by means of the session key, the following steps:
- receiving from the service a piece of data input by the user, said piece of data having been requested by the server,
- sending the input piece of data to the contactless reader, said input piece of data being intended for transmission to the server.

8. Mobile terminal adapted for securing a transaction of a contactless service, said terminal storing said contactless service, said transaction involving the mobile terminal, a contactless reader (12) and a remote server (13), said server storing at least one sensitive piece of data and/or function of the service necessary for the execution of the transaction, said terminal comprising a security module (14), said terminal being **characterized in that** it stores a security application (15) and **in that** it further comprises:
- first receiving means (105), arranged to receive a first value (α) for determining a session key from the contactless reader,
- second receiving means (106), arranged to receive from the server a second value for determining a session key (β) and a first one-time password (OTPin) calculated by the server by means of a secret key (Kₛ) shared with the security element,
- sending means (107), arranged to send to the contactless reader the second value for determining a session key and an authentication message (MAC) for authenticating at least the first one-time password, said authentication message being intended to be verified by the server and said first and second determination values being used by the server and by the reader to calculate a session key (Kₛₑₛₛ), said key being intended to be used to secure the exchanges between the reader and the server.

9. System for securing a transaction of a contactless service, comprising a mobile terminal according to Claim 8 and:
- a contactless reader (12) adapted for communicating with the security application of the mobile terminal, and comprising:
- sending means arranged to send the first value for determining the session key to the security application,
- receiving means arranged to receive the second value for determining the session key,
- means for calculating the session key, arranged to calculate the session key on the basis of the first and second values for determining the session key,
- a remote server (13), adapted for storing at least one sensitive piece of data and/or function of the payment application, and comprising;
- sending means arranged to send the first value for determining the session key to the mobile terminal,
- calculation and sending means, arranged to calculate the first one-time password and send it to the security application,
- calculation means arranged to calculate the session key,
- receiving and verification means arranged to receive and verify the authentication message.

10. Computer program which is stored on a data medium and can be loaded into the memory of a mobile terminal, the program comprising code instructions for executing the steps of the method for securing a transaction of a contactless service according to any of Claims 1 to 7, when the program is executed on said mobile terminal.

11. Data medium on which the program according to Claim 10 is recorded.
